# EUROPEAN PATENT APPLICATION

(11) **EP 4 498 646 A2**
(43) Date of publication of application: **29.01.2025**
(21) Application number: 24184745.8
(22) Date of filing: 26.06.2024
(51) Int. Cl.: H04L 27/00, H04L 27/32, H04B 1/40, H04L 25/00

(54) **JOINT RECEIVER ARCHITECTURE FOR SUB-GIGAHERTZ RECEIVER**

(30) Priority: 28.06.2023 US 202318215720
(71) Applicant: Amazon Technologies, Inc., Seattle, WA 98108-1226 (US)
(72) Inventor: lCHAPURAPU, Ravi, Seattle, 98109-5210 (US)
(74) Representative: EIP

(57) **Abstract**

Technologies directed to reducing switching latency between different modulation schemes are described. One sub-gigahertz (sub-GHz) receiver includes radio frequency (RF) circuitry, an analog-to-digital converter (ADC), a first module, and a second module. The ADC can generate in-phase and quadrature samples (IQ samples) representing an RF signal received by the sub-GHz receiver. The first module can demodulate the IQ samples according to a first modulation scheme, and the second module can demodulate the IQ samples according to a second modulation scheme different from the first modulation scheme. The first module and the second module can concurrently demodulate the IQ samples.

## Description

### BACKGROUND

Sub-gigahertz (sub-GHz) wireless protocols operate in frequency bands below 1 GHz. These sub-GHz wireless protocols are typically used for long-range and low-power applications that require efficient communication over large distances or through obstacles. Sub-GHz wireless protocols can achieve longer communication ranges compared to higher-frequency protocols. Lower frequency signals can travel further and penetrate obstacles more effectively, making sub-GHz protocols suitable for long-range connectivity applications. Due to their longer wavelengths, sub-GHz signals have better penetration capabilities through walls, buildings, and vegetation. This characteristic makes them ideal for applications, such as smart metering, agricultural monitoring, industrial automation, and other scenarios where signals need to reach distant locations or pass through obstacles. Sub-GHz wireless protocols typically offer lower data rates than higher frequency protocols such as the Wi-Fi^{®} or Bluetooth^{®} protocols. The trade-off for longer range and lower power consumption is a reduced capacity for high-bandwidth data transmission. However, sub-GHz wireless protocols are often well-suited for applications prioritizing low-rate intermittent data transfer or simple command and control operations.

### BRIEF DESCRIPTION OF DRAWINGS

The present inventions will be understood more fully from the detailed description given below and from the accompanying drawings of various embodiments of the present invention, which, however, should not be taken to limit the present invention to the specific embodiments but are for explanation and understanding only.
FIG. 1 is a block diagram of a sub-gigahertz (sub-GHz) receiver coupled to an antenna according to at least one embodiment.
FIG. 2 is a block diagram of a sub-GHz receiver coupled to an antenna according to at least one embodiment.
FIG. 3 is a block diagram of a wireless device with multiple radios, including a sub-GHz radio and multi-modulation scheme logic according to at least one embodiment.
FIG. 4 illustrates a portion of a LoRa packet with a preamble, SFD, and header symbols, according to at least one embodiment.
FIG. 5 is a flow diagram of a method of attempting to demodulate in-phase and quadrature samples in parallel according to at least one embodiment.
FIG. 6 is a block diagram of an electronic device with multi-modulation scheme logic for synchronizing the reception of a payload of the incoming packet according to one embodiment.

### DETAILED DESCRIPTION

Technologies directed to removing switching latency between multiple modulation schemes of a sub-GHz radio are described. For example, a sub-GHz receiver can use multiple modulation schemes, such as a chirp spread spectrum (CSS) scheme (Lora), a frequency shift keying (FSK) scheme, and an Orthogonal Frequency Division Multiplexing with Long Range (OFDM-LR) scheme (which might be using quadrature amplitude modulation or phase shift keying). Traditionally, a signal from an antenna might be processed, and then a switch is used to direct output to a CSS module, an FSK module, a PSK module, an OFDM module, or an OFDM-LR module. Switching between the modules adds switching latency to the operations of the sub-GHz radio.

Aspects and embodiments of the present disclosure address the above and other deficiencies, including the switching latency, by providing a processed signal (converted IQ samples) to all of the modules in parallel (e.g. concurrently). Specifically, analog processing (e.g., bandpass filtering, gain, etc.) is performed on a signal generated by radio frequency (RF) hardware, and the resultant signal is sampled using an ADC (e.g., to generate I/Q samples). The generated data is sent to all modules (e.g., two, three, four, or more). This is advantageous because it eliminates the need to allow for switching latency when receiving signals (or allocating time for transmission). For example, for a switch with a switching latency of 125 microseconds (or over 1/10^{th} of a millisecond), this switching latency would have to be accounted for in scheduling receive windows of the receiver for two different protocols. In contrast, if the switch is eliminated, receive windows can be scheduled with no allowance for switching latency. The aspects and embodiments of the present disclosure can share a frequency range among two or more protocols for concurrent receipt of signals using the two or more protocols. For example, consider 1 MHz of bandwidth shared among two protocols, with a first 500 kHz frequency band used for a first protocol and a second 500 kHz frequency band used for a second protocol. Each of these modules can determine, based on the data, the signal for their 500 kHz frequency band and demodulate accordingly.

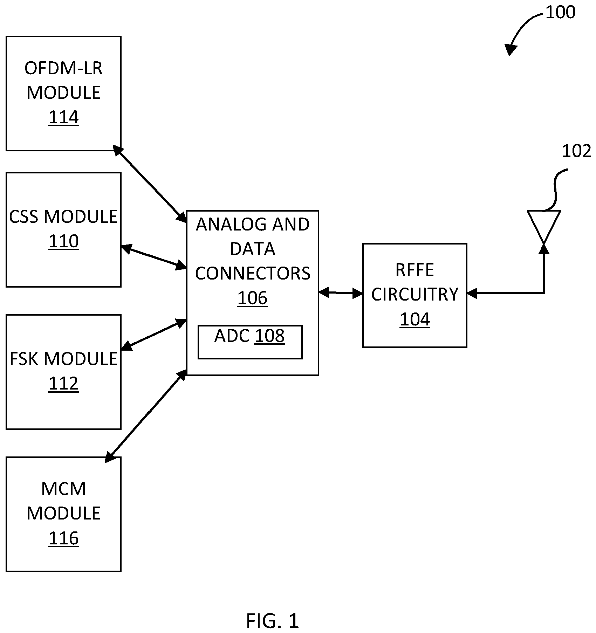

FIG. 1 is a block diagram of a sub-gigahertz (sub-GHz) radio 100 coupled to an antenna 102 according to at least one embodiment. The sub-GHz radio 100 can operate according to one or more sub-GHz wireless protocols. Sub-GHz wireless protocols refer to wireless communication protocols that operate in frequency bands below 1 GHz. For example, the frequency range can be from a few hundred kilohertz (kHz) to several hundred megahertz (MHz) (e.g., 169 MHz, 433 MHz, 868 MHz, and 915 MHz). Some popular sub-GHz wireless protocols include LoRa (Long Range), Sigfox, Wireless M-Bus, or the like. LoRa is a low-power wide-area network (LPWAN) protocol that enables long-range communication with low power consumption. LoRaWAN operates in the unlicensed sub-GHz bands and is commonly used in applications like smart cities, asset tracking, and agriculture. Sigfox is another LPWAN protocol that utilizes ultra-narrowband technology to achieve long-range communication with low power requirements. Sigfox operates in the unlicensed sub-GHz bands and is often used for Internet of Things (IoT) applications. Wireless M-Bus is a protocol designed initially for metering applications such as electricity, gas, and water meters. It operates in various sub-GHz frequency bands and provides reliable and energy-efficient data transmission for utility metering. These sub-GHz protocols enable a wide range of applications requiring long-range connectivity, extended battery life, and reliable communication in challenging environments. These sub-GHz wireless protocols can use different modulation schemes. So, to support multiple modulation schemes, the sub-GHz radio 100 includes multiple modulation modules, such as the three illustrated in FIG. 1. For example, LoRa utilizes a modulation scheme called Chirp Spread Spectrum (CSS). CSS spreads the signal across a wide bandwidth by varying the frequency linearly over time. This modulation technique provides excellent sensitivity, allowing LoRa devices to detect and decode weak signals even in noisy environments. LoRa operates in the license-free sub-GHz frequency bands, such as 868 MHz (Europe), 915 MHz (North America), and 433 MHz (Asia). These frequency bands enable long-range communication and better penetration through obstacles than higher frequency bands. For another example, Orthogonal Frequency Division Multiplexing with Long Range (OFDM-LR) uses OFDM modulation schemes, and Wireless Smart Utility Networks (WiSun) uses a variant of OFDM known as Multi-Carrier Modulation (MCM). OFDM is a multi-carrier modulation technique that divides the available bandwidth into multiple narrowband subcarriers, each carrying a portion of the data. OFDM-LR is a new long range extension of the 802.15.4-2020 OFDM specification. The extension can be used for increased link budget and reliability while remaining compliant with existing regulatory regulations worldwide. MCM divides the available bandwidth into multiple subcarriers and transmits data symbols using various modulation schemes, such as Binary Phase Shift Keying (BPSK) or Quadrature Amplitude Modulation (QAM). Some sub-GHz wireless protocols use a frequency shift keying (FSK) modulation scheme.

Conventionally, a sub-GHz receiver that supports multiple modulation schemes uses a switching scheme that switches between different modulation modules. For example, a signal received via an antenna can be directed to one modulation module at one point, and then a switch is used to direct the received signal to another one of the modulation modules when a different modulation scheme is needed. The switching adds switching latency when receiving signals. For example, for a switch with a switching latency of 125 microseconds (or over 1/10^{th} of a millisecond). This switching latency would have to be accounted for in scheduling receive windows of the receiver for two different protocols. In contrast, if the switch is eliminated, the receive windows can be scheduled with no allowance for switching latency, as illustrated in FIG. 1. As illustrated and described below, the approach in the sub-GHz radio 100 obviates the switching latency by providing a processed signal (or converted data) to all modules in parallel (e.g. concurrently). This approach is advantageous because it eliminates the need to allow for switching latency when receiving signals (or allocating time for transmission).

As illustrated in FIG. 1, the sub-GHz radio 100 includes radio frequency front-end (RFFE) circuitry 104, analog and data connectors 106, a CSS module 110, an FSK module 112, an OFDM-LR module 114, and a MCM module 116. The RFFE circuitry 104 is coupled to the antenna 102. The antenna 102 can receive and transmit RF signals. The antenna 102 converts electromagnetic waves into electrical signals or vice versa. The RFFE circuitry 104 can include components or circuits to handle the reception and transmission of RF signals in a communication system. The RFFE circuitry 104 can include Low-Noise Amplifier(s) (LNA(s)), filter(s) (bandpass, bandstop filters), mixer(s), power amplifier(s) (PA(s)), or the like. The LNA is an amplifier placed at the front-end of the sub-GHz radio 100 to amplify weak incoming signals while minimizing added noise. It boosts the received signal strength, improving the system's signal-to-noise ratio (SNR) and overall sensitivity. The filters can allow or block specific frequency bands. Bandpass filters allow only the desired frequency range to pass through while attenuating signals outside the desired band. Bandstop filters, also known as notch filters, attenuate signals within a specific frequency range while allowing others to pass. Mixers are used for frequency conversion in both receivers and transmitters. They combine the RF signal with a local oscillator signal to generate a new frequency. In receivers, mixers down-convert high-frequency signals to a lower frequency range, while in transmitters, mixers up-convert the signal to the desired frequency. The PA can amplify an RF signal to a higher power level before transmission. It ensures that the transmitted signal is strong enough to overcome propagation losses and reach the intended receiver with sufficient strength. The RFFE circuitry 104 can also include a Variable Gain Amplifier (VGA), frequency synthesizers, switches, impedance matching circuits, or the like. The VGAs are used to adjust the gain of the RF signal. They provide a means to control signal strength based on system requirements or to compensate for variations in input signal strength. VGAs are commonly employed in receivers to handle dynamic range requirements. A frequency synthesizer generates stable and precise frequency signals required for local oscillators, frequency references, and clock signals in the RF front-end. It typically contains a phase-locked loop (PLL) circuit or a direct digital synthesizer (DDS). RF switches can be used to route signals to different paths or components within the RFFE circuitry 104. They enable functions such as signal selection, antenna switching, or channel switching in multi-band systems. The impedance matching circuits can be used to match the impedance of various components within the RFFE circuitry 104 to ensure maximum power transfer and minimize signal reflections. They help optimize the efficiency and performance of the RF system.

The analog and data connectors 106 can be one or more components coupled to the RFFE circuitry 104 to process and convert analog signals received from the RFFE circuitry 104 into digital signal or data for the CSS module 110, FSK module 112, OFDM-LR module 114, and MCM module 116. In at least one embodiment, the analog and data connectors 106 includes analog processing circuitry and an analog-to-digital converter (ADC) 108. The analog processing circuitry can include circuitry to amplify an analog signal, filter an analog signal, or the like. In at least one embodiment, the analog processing circuitry can include a bandpass filter and a VGA. The ADC 108 can receive an analog signal and generate a digital signal. In at least one embodiment, the ADC 108 can generate in-phase and quadrature samples (IQ samples) representing an RF signal received via the antenna 102. In at least one embodiment, the output of the ADC 108 can be directed to each of the CSS module 110, FSK module 112, OFDM-LR module 114, and MCM module 116 in parallel (e.g. generally concurrently). The CSS module 110, FSK module 112, OFDM-LR module 114, and MCM module 116 can receive the IQ samples in parallel (e.g. generally concurrently) and perform preamble detection using the IQ samples to identify a valid preamble. Each module can attempt to demodulate the IQ samples to decode a valid preamble. A module that identifies a valid preamble can modulate the payload. Other modules that do not identify a valid preamble do not necessarily have to keep processing the IQ samples to demodulate or decode the payload. Also, a module that successfully identifies a valid preamble can fine-tune circuitry in the analog and data connectors 106 to improve performance for demodulating the payload, e.g. by modifying a gain control setting or adjusting a gain value of a variable gain amplifier or programmable gain amplifier. Each of the CSS module 110, FSK module 112, OFDM-LR module 114, and MCM module 116 can demodulate the IQ samples according to their respective modulation scheme. Additional details of each of the modules are described below.

The CSS module 110 can be a device, component, or functionality that implements the CSS modulation technique for wireless communication. CSS is a modulation scheme that spreads the signal over a wide frequency range by continuously varying the frequency of the transmitted waveform. The CSS module 110 can include various components and algorithms to generate, transmit, and receive chirp signals. In at least one embodiment, the CSS module 110 includes a chirp generator that produces a continuous waveform with a linearly increasing or decreasing frequency over time. The chirp waveform is characterized by its starting frequency, ending frequency, and chirp rate (slope). The generator may use a digital signal processing algorithm or an analog circuit to create the chirp signal. The digital data to be transmitted is typically modulated onto the chirp signal. This can be done using various modulation schemes, such as phase-shift keying (PSK), frequency-shift keying (FSK), or binary phase-shift keying (BPSK). Additionally, encoding techniques like forward error correction (FEC) may be employed to enhance the reliability of the transmitted data. The chirp signal generated by the CSS module 110 is spread over a wide frequency range using a spreading code. This spreading code is a unique sequence that distinguishes the desired signal from noise and interference. By spreading the signal, CSS module 110 can provide resistance against narrowband interference and improve the robustness of the communication link. The CSS module 110 can include both a transmitter and a receiver. The transmitter amplifies the modulated and spread chirp signal to an appropriate power level for transmission. On the receiving side, the CSS module 110 can include a receiver that captures the incoming signal and processes it to extract the original data. The receiver employs algorithms to demodulate, decode, and despread the received chirp signal. The CSS module 110 can perform various signal-processing tasks to ensure reliable communication. This includes tasks such as carrier frequency and timing synchronization, channel equalization, and error detection and correction. These processes help mitigate the effects of noise, fading, and other impairments in the wireless channel. By utilizing CSS modulation, the CSS module 110 can enable reliable and robust wireless communication by spreading the signal across a wide frequency range. This technique offers several benefits, including resistance to interference, increased range, and improved signal reception in challenging environments.

The FSK module 112 can be a device, component, or functionality that implements the FSK modulation technique for wireless communication. FSK is a digital modulation scheme in which the digital data is transmitted by shifting the carrier frequency between two distinct frequencies. The FSK module can include various components and algorithms to generate, transmit, and receive FSK signals. The FSK module 112 can take digital data to be transmitted and modulate it onto a carrier signal by shifting the carrier frequency between two predefined frequencies. The two frequencies represent the two digital states, such as 0 and 1. The specific frequencies used for the two states are determined by the modulation scheme and system requirements. The FSK module 112 includes a frequency generator that generates the carrier signal at the desired frequencies. It may use a crystal oscillator, a voltage-controlled oscillator (VCO), or a digital signal processing algorithm to produce the carrier signal with accurate frequency control. A modulator in the FSK module 112 combines the digital data with the carrier signal to create the modulated FSK signal. The modulator typically employs mixing or switching techniques to shift the carrier signal frequency based on the input data. This process effectively encodes the digital information into the frequency variations of the carrier signal. The FSK module 112 can include both a transmitter and a receiver. The transmitter amplifies the modulated FSK signal to an appropriate power level for transmission. On the receiving side, the FSK module includes a receiver that captures and demodulates the incoming FSK signal to extract the original data. The receiver employs algorithms and circuits to detect and decode the frequency variations in the received signal. The FSK module 112 can perform various signal-processing tasks to ensure reliable communication. This includes tasks such as carrier frequency and timing synchronization, symbol detection, and error detection and correction. These processes help mitigate the effects of noise, interference, and channel impairments to improve the accuracy of data recovery. By utilizing FSK modulation, the FSK module 112 can enable the transmission and reception of digital data by shifting the carrier frequency between two distinct frequencies. This modulation technique provides a straightforward and reliable method for wireless communication, making FSK modules widely used in various industries and applications.

The OFDM-LR module 114 includes various components and algorithms to generate, transmit, and receive OFDM signals optimized for long-range communication. The OFDM-LR module 114 can be a device, component, or functionality that implements the OFDM modulation scheme for wireless communication, with a particular focus on long-range transmission. OFDM is a multi-carrier modulation technique that divides the available bandwidth into multiple narrowband subcarriers, each carrying a portion of the data. The OFDM-LR module includes various components and algorithms to generate, transmit, and receive OFDM signals optimized for long-range communication. The OFDM-LR module 114 can generate a set of orthogonal subcarriers, which are sinusoidal waveforms evenly spaced in frequency. The subcarriers are typically modulated with digital data symbols using techniques such as amplitude-shift keying (ASK), phase-shift keying (PSK), or quadrature amplitude modulation (QAM). OFDM includes a guard interval between consecutive OFDM symbols to mitigate the effects of multipath fading and inter-symbol interference. The guard interval is a period of time during which the receiver ignores the incoming signal, allowing it to recover from delayed reflections. The length of the guard interval depends on the expected delay spread in the wireless channel. The digital data symbols are mapped onto the subcarriers using various modulation schemes. The choice of modulation scheme depends on factors such as data rate requirements, channel conditions, and the desired level of robustness. Common modulation schemes used in OFDM include BPSK, QPSK, 16-QAM, and 64-QAM. In the transmitter, the OFDM-LR module 114 can perform an Inverse Fast Fourier Transform (IFFT) to convert the data symbols from the frequency domain to the time domain. This process converts the modulated subcarriers into a time-domain OFDM symbol. At the receiver, the OFDM-LR module 114 performs a Fast Fourier Transform (FFT) to convert the received time-domain OFDM symbol back to the frequency domain for demodulation and decoding. The OFDM-LR module 114 can include both a transmitter and a receiver. The transmitter converts the modulated symbols into an analog waveform and amplifies it for transmission. On the receiving side, the OFDM-LR module 114 can capture the received signal, performs signal processing tasks such as synchronization, equalization, and demodulation, and recovers the original data symbols. The OFDM-LR module 114 can be specifically designed and optimized for long-range communication. They employ techniques to enhance the transmission performance and coverage range, such as low-density parity-check (LDPC) forward error correction (FEC), adaptive modulation and coding, and channel estimation algorithms. These optimizations help mitigate the effects of signal attenuation, interference, and other impairments encountered in long-range communication. By utilizing OFDM, the OFDM-LR module 114 can enable efficient and robust wireless communication by dividing the available bandwidth into multiple orthogonal subcarriers. This modulation technique provides high data rates, excellent spectrum utilization, and resilience against multipath propagation, making it suitable for various applications, including those requiring long-range transmission.

The MCM module 116 can be a device, component, or functionality that implements the MCM modulation scheme for wireless communication, such as for the WiSun protocol stack. WiSun is a wireless networking technology specifically designed for smart utility networks, such as smart grid systems, smart metering, and other industrial applications. The MCM module 116 can enable reliable and secure communication between various devices within a utility network. The MCM module 116 can operate in the sub-GHz frequency bands, typically using frequencies such as 868 MHz or 915 MHz. These lower frequency bands provide better range and penetration through obstacles than higher frequency bands, allowing for long-range communication and robust connectivity. The Physical (PHY) layer of the MCM module 116 can implement the modulation, coding, and transmission of the radio signals using MCM. The Medium Access Control (MAC) layer of the MCM module 116 can govern access to the shared wireless medium and provides mechanisms for reliable and efficient data transfer. The MAC layer utilizes a Time-Slotted Channel Hopping (TSCH) mechanism to allocate time slots to different devices, enabling synchronized communication and reducing interference. The routing and network Layer of the MCM module 116 can support a mesh networking topology, where multiple devices form a self-healing and self-configuring network. The network layer in the MCM module 116 can handle the routing of data packets between devices, ensuring optimal paths and efficient communication. It employs routing protocols specifically designed for utility networks, such as RPL (Routing Protocol for Low-power and Lossy Networks). By utilizing MCM, the MCM module 116 can enable efficient and reliable communication within utility networks, supporting the implementation of advanced smart grid and utility management systems.

It should be noted that in the embodiments described herein, no switch or switching mechanism is used to switch between each of the modulation modules (e.g., 110-116). Rather, the IQ samples are received in parallel (e.g. generally concurrently) by each of the modules. By eliminating the switch, the receive windows can be scheduled without allowance for switching latency, as described herein. Although each module receives the IQ samples, one or more of the modules may not be able to successfully process data that is modulated using a different modulation scheme. For example, as described above, an RF signal is received via the antenna 102. The RF signal can include an incoming packet with a preamble and a payload. Each of the CSS module 110, FSK module 112, OFDM-LR module 114, and MCM module 116 can demodulate the preamble. In some cases, not all of the modules will successfully decode the preamble. In some cases, the module can be powered down or transition to a lower-power state when it does not successfully decode the preamble. In some cases, the preamble is modulated according to one of the modulation schemes. As such, only one of the CSS module 110, FSK module 112, OFDM-LR module 114, and MCM module 116 demodulates the payload responsive to successfully decoding the preamble.

In other embodiments, a frequency range can be shared among two or more protocols for concurrent receipt of two or more signals using the two or more protocols. For example, a frequency band with a bandwidth of 1 MHz could be shared among two protocols, with a first 500 kHz frequency band used for a first protocol and a second 500 kHz frequency band used for a second protocol. In at least one embodiment, the RF signal received via the antenna 102 includes a first signal corresponding to a first protocol and a second signal corresponding to a second protocol. Each of the CSS module 110, FSK module 112, OFDM-LR module 114, and MCM module 116 can process the IQ samples. One of the CSS module 110, FSK module 112, OFDM-LR module 114, and MCM module 116 can demodulate the first signal, while another can demodulate the second signal. In at least one embodiment, the RF signal received via the antenna 102 includes a first signal corresponding to a first portion of the sub-GHz frequency band and a second signal corresponding to a second portion of the sub-GHz frequency band. Each of the CSS module 110, FSK module 112, OFDM-LR module 114, and MCM module 116 can process the IQ samples. One of the CSS module 110, FSK module 112, OFDM-LR module 114, and MCM module 116 can demodulate the first signal, while another can demodulate the second signal. The first and second signals can be time-separated signals. The first and second signals can be separated in frequency. The first and second signals can be both separated in time and frequency. In some cases, the first signal is received in a first RF signal at a first time, and the second signal is received in a second RF signal at a second time after the first time. In at least one embodiment, the RF signal is received at a first time, and a second RF signal is received at a second time after the first time. The RF signal includes a first signal corresponding to a first protocol. The second RF signal includes a second signal corresponding to a second protocol. Each of the CSS module 110, FSK module 112, OFDM-LR module 114, and MCM module 116 can process the IQ samples of the first signal and IQ samples of the second signal. One of the Each of the CSS module 110, FSK module 112, OFDM-LR module 114, and MCM module 116 can demodulate the first signal and another one of the Each of the CSS module 110, FSK module 112, OFDM-LR module 114, and MCM module 116 can demodulate the second signal.

As noted above, analog processing (e.g., bandpass filtering, gain, etc.) is performed on a signal generated by RF hardware, and the resultant signal is sampled using an ADC. The generated data is sent to all three modules, so both the module associated with the first protocol and the module associated with the second protocol will receive data for the signal. Each of these modules can determine, based on the data, the signal for their 500 kHz frequency band and demodulate accordingly.

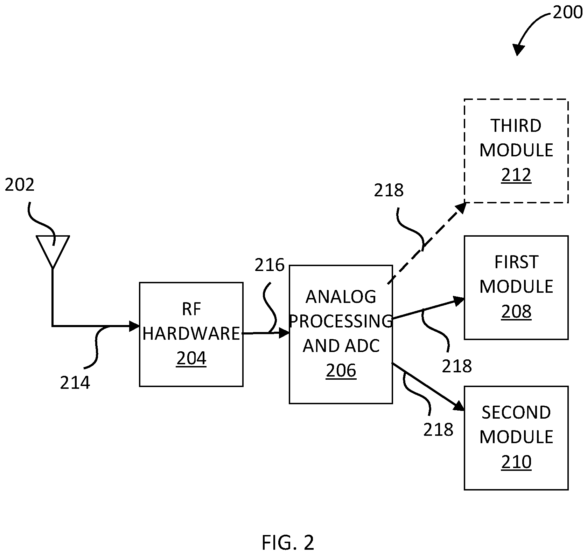

FIG. 2 is a block diagram of a sub-GHz receiver 200 coupled to an antenna 202 according to at least one embodiment. The sub-GHz receiver 200 includes RF hardware 204, analog processing and ADC 206, and a first module 208 and a second module 210. The RF hardware 204 can include circuity to receive an RF signal via the antenna 202 and generate a corresponding analog signal 216. The analog processing and ADC 206 can receive and process the analog signal 216 to generate IQ samples 218 (or other types of data or digital signals). The IQ samples represent the RF signal 214 received via the antenna 202. Specifically, analog processing (e.g., bandpass filtering, gain, etc.) can be performed on a signal generated by RF hardware 204, and the resultant signal is sampled using an ADC (e.g., to generate I/Q IQ samples 218). The generated data is sent to all the modules. As noted above, this is advantageous because it eliminates the need to allow for switching latency when receiving signals (or allocating time for transmission). For example, for a switch with a switching latency of 125 microseconds (or over 1/10^{th} of a millisecond), this switching latency would have to be accounted for in scheduling receive windows of the receiver for two different protocols. In contrast, if the switch is eliminated using the architecture of sub-GHz receiver 200, receive windows can be scheduled with no allowance for switching latency.

As illustrated in FIG. 2, the first module 208 receives the IQ samples 218 output from the analog processing and ADC 206 and demodulates the IQ samples 218 according to a first modulation scheme. The second module receives the same IQ samples 218 output from the analog processing and ADC 206 and demodulates the IQ samples 218 according to a second modulation scheme different from the first modulation scheme. The first module 208 and the second module 210 attempt to demodulate the IQ samples 218 in parallel (e.g. generally concurrently).

The sub-GHz receiver 200 can have two or more demodulation schemes and operate according to one or more sub-GHz wireless protocols. In at least one embodiment, the sub-GHz receiver 200 includes a third module 212. The third module 212 receives the same IQ samples 218 output from the analog processing and ADC 206 and demodulates the IQ samples 218 according to a third modulation scheme different from the second modulation scheme (and/or the first modulation scheme). The first module 208 can be a CSS module, an FSK module, a PSK module, an OFDM module, an OFDMA module, an OFDMA-LR module, an MCM module or the like. The second module 210 or the third module 212 can be a different one of the CSS module, FSK module, PSK module, OFDM module, OFDMA module, OFDMA-LR module, MCM module or the like.

In at least one embodiment, the RF signal 214 includes an incoming packet with a preamble and a payload. Each of the first module 208 and the second module 210 can demodulate the preamble. In some cases, the preamble can be decoded by one of the two modules. That is, only one of the first module 208 and the second module 210 demodulates the payload responsive to successfully decoding the preamble.

In at least one embodiment, the RF signal 214 includes a first signal corresponding to a first protocol and a second signal corresponding to a second protocol. Each of the first module 208 and the second module 210 can process the IQ samples 218. The first module 208 can demodulate the first signal. The second module 210 can demodulate the second signal.

In at least one embodiment, the RF signal 214 includes a first signal corresponding to a first portion of a sub-GHz frequency band and a second signal corresponding to a second portion of the sub-GHz frequency band. For example, if the RF signal has a bandwidth of 1 MHz, the first portion could correspond to half of the bandwidth (500 kHz), and the second portion could correspond to the other half of the bandwidth (500 kHz). The first module 208 can extract the IQ samples 218 corresponding to the first portion and demodulate the first signal. The second module 210 can extract the IQ samples 218 corresponding to the second portion and demodulate the second signal.

In other embodiments, different bandwidth percentages can be used to split the bandwidth between two or more portions of the frequency range. In at least one embodiment, the sub-GHz frequency band can be split into a first modulation scheme with a high data rate (HDR) and a second modulation scheme with a low data rate (LDR) band. For example, the OFDM-LR module 114 can have data rates between a first range of approximately 2-20 kbps. The OFDM-LR module 114 can have data rates between a second range of approximately 50 kps -20 Mbps. The CSS module 110 can have data rates between a third range of approximately 2 to 70 kbps. The FSK module 112 can have data rates between a fourth range of approximately 50 to 250 kbps. In at least one embodiment, the RF signal can include an OFDM signal and an FSK signal at different frequency ranges within the sub-GHz frequency band, as described herein. In other embodiments, the sub-GHz receiver 200 can communicate on two co-located channels within the sub-GHz frequency band using the different modulation modules. The different modules can receive RF signals at the same time, at different times, and in different frequency ranges within a sub-GHz frequency band.

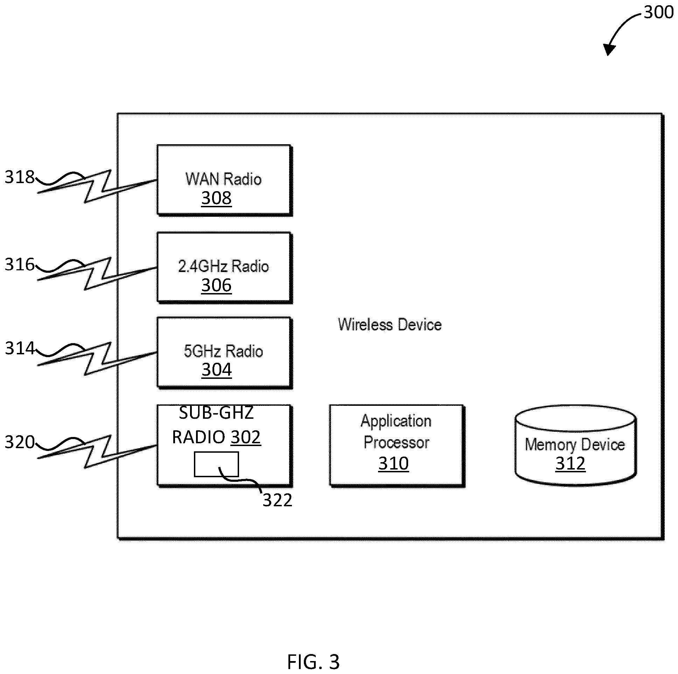

FIG. 3 is a block diagram of a wireless device 300 with multiple radios, including a sub-GHz radio 302 with multi-modulation scheme logic 322, according to one embodiment. The wireless device 300 also includes a 5GHz radio 304, a 2.4GHz radio 306, and a wide area network (WAN) radio 308 (e.g., cellular radio). The sub-GHz radio 302 creates a wireless connection 320 between the wireless device 300 and another wireless device (not illustrated in FIG. 3). The sub-GHz radio 302 can be a low-power, long-range radio, such as a low-power, long-range wide area network (LPWAN) radio, for example, a wireless radio that uses the LoRa technology. The sub-GHz radio 302 can include multi-modulation scheme logic 322. The multi-modulation scheme logic 322 can include processing logic that comprises hardware (e.g., circuitry, dedicated logic, programmable logic, microcode, etc.), software, firmware, or a combination thereof. The operations of the multi-modulation scheme logic 322 are described in more detail below.

The 5GHz radio 304 creates a wireless connection 314 between the wireless device 300 and another wireless device (not illustrated in FIG. 3). The 2.4GHz radio 306 creates a wireless connection 316 between the wireless device 300 and a wireless device (not illustrated). The WAN radio 308 creates a cellular connection between the wireless device 300 and a device in a cellular network (not illustrated). In other embodiments, more than one 2.4GHz radio may be used for more wireless connections. Alternatively, a different number of 5 GHz radios may be used for more or less wireless connections with other nodes. In other embodiments, multiple cellular radios may be used to create multiple cellular connections.

In at least one embodiment, the sub-GHz radio 302 is a LoRa radio that utilizes the LoRa technology. In another embodiment, the sub-GHz radio 302 is a Long-Range Wide Area Network (LRWAN) radio. In another embodiment, the sub-GHz radio 302 operates in a sub-gigahertz frequency range. For example, a sub-gigahertz radio operates in the ISM spectrum bands below 1 GHz, such as in the 769 - 935 MHz, 315 MHz, and the 468 MHz frequency range. The sub-gigahertz radio can be similar to radios used in Internet of Things (IoT) applications.

The wireless device 300 includes an application processor 310 (e.g., a processing device) and a memory device 312 (e.g., for memory and/or storage). In some embodiments, the memory device 312 can store files, control and command data, as well as the aggregate data described herein. The memory device 312 may be volatile memory, non-volatile memory, or a combination of both. The application processor 310 can be coupled to each of the radios.

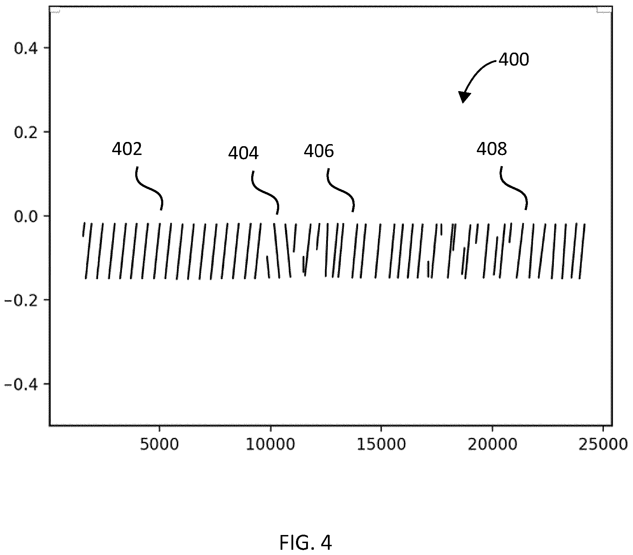

In at least one embodiment, the wireless device 300 can receive a signal of an incoming packet (e.g., LoRa packet), including a preamble, a header, and a payload. For example, the wireless device 300 can include a receiver to receive an incoming signal. The wireless device 300 can include one or more analog-to-digital converters (ADCs) that convert the received signal into digital data. For example, the wireless device 300 can generate a set of in-phase and quadrature (IQ) samples of N symbol length representing a received signal of an incoming packet. The wireless device 300 can include analog front-end (AFE) circuitry to receive the signal and generate the IQ samples. Alternatively, the application processor 310 can receive I and Q signals from the AFE circuitry and digitize the analog signals into digital signals. The multi-modulation scheme logic 322 can include an ADC that outputs the digital data to multiple modulation blocks that implement different modulation schemes, such as described above with respect to FIG. 1 and FIG. 2. The multi-modulation scheme logic 322 can remove the switching latency between different modulation schemes of a sub-GHz radio. A symbol is a unit of information transmitted over the air. Wireless packets start with a repetition of a fixed symbol called a preamble. The receiver uses the preamble to detect and synchronize the packet with the transmitter. The receiver demodulates the symbol value over the air and looks for a pattern of this repetitive preamble symbol value. In at least one embodiment, the multi-modulation scheme logic 322 can attempt to detect or demodulate a preamble using multiple modulation schemes in parallel (e.g. generally concurrently) instead of switching between the different modulation schemes as done conventionally. The receiver sensitivity is determined by the power level at which the preamble is detected, and the payload of the frame is decoded without bit errors. A LoRa frame includes the following parts in order: a preamble of repeated number of up chirps, 2.25 down chirps (called Start of Frame Delimiters (SFD)), header symbols (in explicit mode), and payload symbols, such as illustrated in FIG. 4

FIG. 4 illustrates a portion of a LoRa packet 400 with preamble 402, SFD 404, and header symbols 406, according to at least one embodiment. The LoRa packet 400 can include a physical layer frame, a media access control (MAC) layer frame, and an application layer frame. The physical layer frame can start with the preamble 402. The preamble 402 and SFD 404 can be used to detect and synchronize to the incoming LoRa packet 400. The header symbols 406 can provide details of the packet length and encoding parameters, like Coding Rate, Error Correcting Code, or the like. The header symbols 406 are followed by payload symbols 408, where the packet data is encoded. In at least one embodiment, the multi-modulation scheme logic 322 uses the CSS modulation scheme to decode the LoRa packet 400. Other packet types that use other modulation schemes can also be decoded by the multi-modulation scheme logic 322, as described herein.

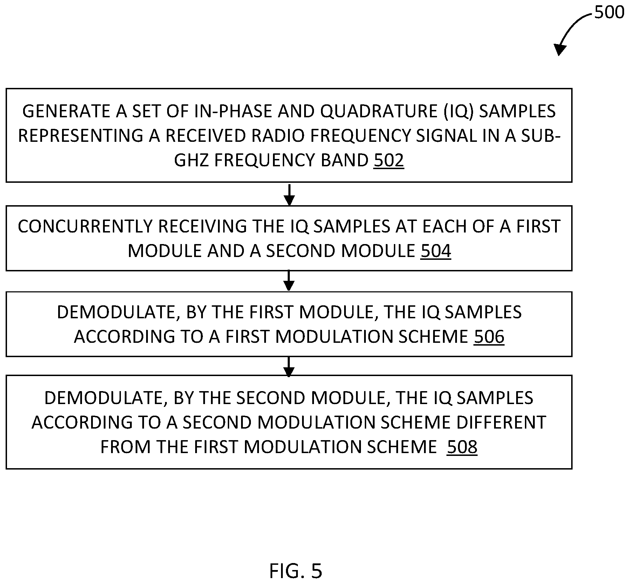

FIG. 5 is a flow diagram of a method 500 of attempting to demodulate in-phase and quadrature samples in parallel according to at least one embodiment. The method 500 can be performed by processing logic that comprises hardware (e.g., circuitry, dedicated logic, programmable logic, microcode, etc.), software, firmware, or a combination thereof. In one embodiment, the sub-GHz radio 100 of FIG. 1 performs the method 500. In at least one embodiment, the sub-GHz receiver 200 of FIG. 2 performs the method 500. In at least one embodiment, the sub-GHz radio 302 of FIG. 3 performs the method 500. In at least one embodiment, the multi-modulation scheme logic 322 of FIG. 3 performs the method 500. In another embodiment, the wireless device 300 of FIG. 3 can perform the method 500. In another embodiment, a processing device can perform the method 500.

Referring to FIG. 5, the processing logic begins the method 500 by the processing logic generating a set of IQ samples representing a received radio frequency signal in a sub-GHz frequency band (block 502). At block 504, the processing logic receives the IQ samples in parallel at each of a first module and a second module. At block 506, the processing logic demodulates, by the first module, the IQ samples according to a first modulation scheme. At block 508, the processing logic demodulates, by the second module, the IQ samples according to a second modulation scheme different from the first modulation scheme.

In a further embodiment, the processing logic receives the IQ samples in parallel at a third module. The processing logic demodulates, by the third module, the IQ samples according to a third modulation scheme different from the second modulation scheme.

In a further embodiment, an RF signal includes an incoming packet with a preamble and a payload. The processing logic demodulates, by the first module, the preamble according to the first modulation scheme. The processing logic demodulates, by the second module, the preamble according to the second modulation scheme different from the first modulation scheme. The processing logic demodulates the payload by only one of the first module or the second module that successfully decoded the preamble.

In a further embodiment, an RF signal includes a first signal corresponding to a first protocol and a second signal corresponding to a second protocol. The processing logic demodulates, by the first module, the IQ samples according to the first modulation scheme to obtain the first signal. The processing logic demodulates, by the second module, the IQ samples according to the second modulation scheme to obtain the second signal.

In a further embodiment, an RF signal includes a first signal corresponding to a first portion of a sub-GHz frequency band and a second signal corresponding to a second portion of the sub-GHz frequency band. The processing logic demodulates, by the first module, the IQ samples in the first portion according to the first modulation scheme to obtain the first signal. The processing logic demodulates, by the second module, the IQ samples in the second portion according to the second modulation scheme to obtain the second signal.

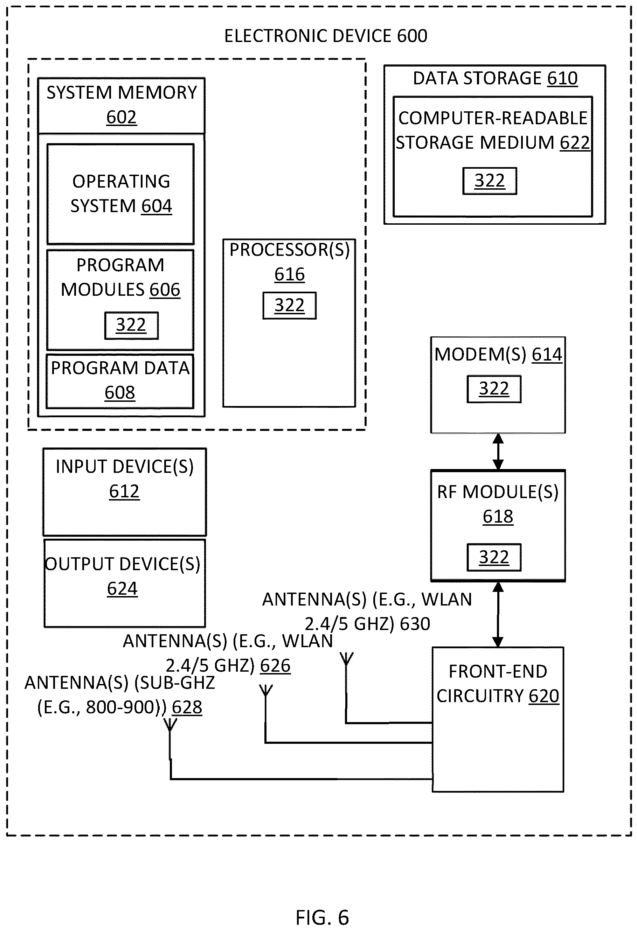

FIG. 6 is a block diagram of an electronic device 600 with multi-modulation scheme logic 322 for synchronizing the reception of a payload of the incoming packet according to one embodiment. The multi-modulation scheme logic 322 can be software executed by the electronic device 600 to perform the operations described herein. The multi-modulation scheme logic 322 can be firmware or hardware of the electronic device 600 to perform the operations described herein. The electronic device 600 may correspond to any of the nodes or devices described above with respect to FIG. 1 to FIG. 3. Alternatively, the electronic device 600 may be other electronic devices, as described herein.

The electronic device 600 includes one or more processor(s) 616, such as one or more central processing units (CPUs), microcontrollers, field-programmable gate arrays, or other types of processing devices. The electronic device 600 also includes system memory 602, which may correspond to any combination of volatile and/or non-volatile storage mechanisms (e.g., one or more memory devices). The system memory 602 stores information that provides an operating system 604, various program modules 606, program data 608, and/or other components. In one embodiment, the system memory 602 stores instructions of methods to control the operation of the electronic device 600. The electronic device 600 performs functions using the processor(s) 616 to execute instructions provided by the system memory 602. In one embodiment, the program modules 606 may include the multi-modulation scheme logic 322 described herein.

In at least one embodiment, a processing device is operatively coupled to a memory device that stores instructions. The processing device executes instructions to perform various operations of the multi-modulation scheme logic 322 described herein.

The electronic device 600 also includes a data storage device 610 that may be composed of one or more types of removable storage and/or one or more types of non-removable storage. The data storage device 610 includes a computer-readable storage medium 622 on which is stored one or more sets of instructions embodying any of the methodologies or functions described herein. Instructions for the program modules 606 (e.g., multi-modulation scheme logic 322) may reside, completely or at least partially, within the computer-readable storage medium 622, system memory 602, and/or within the processor(s) 616 during execution thereof by the electronic device 600, the system memory 602 and the processor(s) 616 also constituting computer-readable media. The electronic device 600 may also include one or more input devices 612 (keyboard, mouse device, specialized selection keys, etc.) and one or more output devices 624 (displays, printers, audio output mechanisms, etc.).

The electronic device 600 further includes a modem 614 to allow the electronic device 600 to communicate via wireless connections (e.g., provided by the wireless communication system) with other computing devices, such as remote computers, an item-providing system, and so forth. The modem 614 can be connected to one or more radio frequency (RF) modules 618. The RF modules 618 may be a sub-GHz radio with multiple modulation schemes, as described herein. The RF modules 618 may be a wireless local area network (WLAN) module, a Wide Area Network (WAN) module, a wireless personal area network (PAN) module, Global Positioning System (GPS) module, or the like. The antenna structures (antenna(s) 626, 628, 630) are coupled to the RF circuitry 620, which is coupled to the modem 614. The RF circuitry 620 may include radio front-end circuitry, antenna-switching circuitry, impedance-matching circuitry, or the like. The antennas 626, 628, 630, may be sub-GHz antennas, GPS antennas, Near Field Communications (NFC) antennas, other WAN antennas, WLAN or PAN antennas, or the like. The modem 614 allows the electronic device 600 to handle both voice and non-voice communications (such as communications for text messages, multimedia messages, media downloads, web browsing, etc.) with a wireless communication system. The modem 614 may provide network connectivity using any type of mobile network technology including, for example, cellular digital packet data (CDPD), general packet radio service (GPRS), EDGE, universal mobile telecommunications system (UMTS), 1 times radio transmission technology (1xRTT), evaluation data optimized (EVDO), highspeed downlink packet access (HSDPA), Wi-Fi^{®}, Long Term Evolution (LTE) and LTE Advanced (sometimes generally referred to as 4G), 5G, etc.

The modem 614 may generate signals and send these signals to the antenna(s) 626 of a first type (e.g., WLAN 2.4/5 GHz), antenna(s) 628 of a second type (e.g., PAN), and/or antenna(s) 630 of a third type (e.g., WLAN 2.4/5 GHz), via RF circuitry 620, and RF module(s) 618 as described herein. Antennas 626, 628, 630, may be configured to transmit in different frequency bands and/or using different wireless communication protocols. The antennas 626, 628, 630 may be directional, omnidirectional, or nondirectional antennas. In addition to sending data, antennas 626, 628, 630, may also receive data, which is sent to appropriate RF modules connected to the antennas. One of the antennas 626, 628, 630, may be any combination of the antenna structures described herein.

In one embodiment, the electronic device 600 establishes a first connection using a first wireless communication protocol and a second connection using a different wireless communication protocol. The first wireless connection and second wireless connection may be active generally concurrently; for example, if a network hardware device is receiving a media item from another network hardware device via the first connection and transferring a file to another user device via the second connection at the same time. Alternatively, the two connections may be active generally concurrently during wireless communications with multiple devices. In one embodiment, the first wireless connection is associated with a first resonant mode of an antenna structure that operates at a first frequency band, and the second wireless connection is associated with a second resonant mode of the antenna structure that operates at a second frequency band. In another embodiment, the first wireless connection is associated with a first antenna structure, and the second wireless connection is associated with a second antenna. In other embodiments, the first wireless connection may be associated with content distribution within mesh nodes of a wireless mesh network (WMN), and the second wireless connection may be associated with serving a content file to a client consumption device, as described herein.

Though a modem 614 is shown to control transmission and reception via the antenna (626, 628, 630), the electronic device 600 may alternatively include multiple modems, each of which is configured to transmit/receive data via a different antenna and/or wireless transmission protocol.

In other embodiment, one or more hardware network devices can be mesh network devices in a WMN. A WMN can contain multiple mesh network devices, organized in a mesh topology. The mesh network devices in the WMN cooperate in the distribution of content files to client consumption devices in an environment, such as in an environment of limited connectivity to broadband Internet infrastructure. The embodiments described herein may be implemented where there is a lack, or slow rollout, of suitable broadband Internet infrastructure in developing nations, for example. These mesh networks can be used in the interim before broadband Internet infrastructure becomes widely available in those developing nations. The network hardware devices are also referred to as mesh routers, mesh network devices, mesh nodes, Meshboxes, or Meshbox nodes. Multiple network hardware devices are wirelessly connected through a network backbone formed by multiple peer-to-peer (P2P) wireless connections (i.e., wireless connections between multiple pairs of network hardware devices). The multiple network devices are wirelessly connected to one or more client consumption devices by node-to-client (N2C) wireless connections. The content file (or generally a content item or object) may be any type of format of digital content, including, for example, electronic texts (e.g., eBooks, electronic magazines, digital newspapers, etc.), digital audio (e.g., music, audible books, etc.), digital video (e.g., movies, television, short clips, etc.), images (e.g., art, photographs, etc.), or multi-media content. The client consumption devices may include any type of content rendering devices such as electronic book readers, portable digital assistants, mobile phones, laptop computers, portable media players, tablet computers, cameras, video cameras, netbooks, notebooks, desktop computers, gaming consoles, DVD players, media centers, and the like.

The embodiments of the mesh network devices may be used to deliver content, such as video, music, literature, or the like, to users who do not have access to broadband Internet connections because the mesh network devices may be deployed in an environment of limited connectivity to broadband Internet infrastructure. In some embodiments described herein, the mesh network architecture does not include "gateway" nodes capable of forwarding broadband mesh traffic to the Internet. The mesh network architecture may include a limited number of point-of-presence (POP) nodes that do have access to the Internet, but the majority of mesh network devices are capable of forwarding broadband mesh traffic between the mesh network devices for delivering content to client consumption devices that would otherwise not have broadband connections to the Internet. Alternatively, instead of the POP node having access to broadband Internet infrastructure, the POP node is coupled to storage devices that store the available content for the WMN. The WMN may be self-contained in the sense that content lives in, travels through, and is consumed by nodes in the mesh network. In some embodiments, the mesh network architecture includes a large number of mesh nodes, called Meshbox nodes. From a hardware perspective, the Meshbox node functions much like an enterprise-class router with the added capability of supporting P2P connections to form a network backbone of the WMN. From a software perspective, the Meshbox nodes provide much of the capability of a standard content distribution network (CDN) but in a localized manner. The WMN can be deployed in a geographical area in which broadband Internet is limited. The WMN can scale to support a geographic area based on the number of mesh network devices and the corresponding distances for successful communications over WLAN channels by those mesh network devices.

Although various embodiments herein are directed to content delivery, such as for the Amazon Instant Video (AIV) service, the WMNs, and corresponding mesh network devices, can be used as a platform suitable for delivering high bandwidth content in any application where low latency is not critical, or access patterns are predictable. The embodiments described herein are compatible with existing content delivery technologies and may leverage architectural solutions, such as CDN services like the Amazon AWS CloudFront service. Amazon CloudFront CDN is a global CDN service that integrates with other Amazon Web services products to distribute content to end-users with low latency and high data transfer speeds. The embodiments described herein can be an extension to this global CDN, but in environments where there is limited broadband Internet infrastructure. The embodiments described herein may provide users in these environments with a content delivery experience equivalent to what the users would receive on a traditional broadband Internet connection. The embodiments described herein may be used to optimize deployment for traffic types (e.g., streaming video) that are increasingly becoming a significant percentage of broadband traffic and taxing existing infrastructure in a way that is not sustainable.

In the above description, numerous details are set forth. It will be apparent, however, to one of ordinary skill in the art having the benefit of this disclosure that embodiments may be practiced without these specific details. In some instances, well-known structures and devices are shown in block diagram form rather than in detail to avoid obscuring the description.

Some portions of the detailed description are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to the desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, as apparent from the above discussion, it is appreciated that throughout the description, discussions utilizing terms such as "inducing," "parasitically inducing," "radiating," "detecting," determining," "generating," "communicating," "receiving," "disabling," or the like, refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage, transmission or display devices.

Embodiments also relate to an apparatus for performing the operations herein. This apparatus may be specially constructed for the required purposes, or it may comprise a general-purpose computer selectively activated or reconfigured by a computer program stored in the computer. Such a computer program may be stored in a computer-readable storage medium, such as, but not limited to, any type of disk, including floppy disks, optical disks, CD-ROMs and magnetic-optical disks, read-only memories (ROMs), random access memories (RAMs), EPROMs, EEPROMs, magnetic or optical cards, or any type of media suitable for storing electronic instructions.

The algorithms and displays presented herein are not inherently related to any particular computer or other apparatus. Various general-purpose systems may be used with programs in accordance with the teachings herein, or it may prove convenient to construct a more specialized apparatus to perform the required method steps. The required structure for a variety of these systems will appear from the description below. In addition, the present embodiments are not described with reference to any particular programming language. It will be appreciated that a variety of programming languages may be used to implement the teachings of the present embodiments as described herein. It should also be noted that the terms "when" or the phrase "in response to," as used herein, should be understood to indicate that there may be intervening time, intervening events, or both before the identified operation is performed.

It is to be understood that the above description is intended to be illustrative, and not restrictive. Many other embodiments will be apparent to those of skill in the art upon reading and understanding the above description. The scope of the present embodiments should, therefore, be determined with reference to the appended claims, along with the full scope of equivalents to which such claims are entitled.

## Claims

1. A method of operating a sub-GHz receiver, the method comprising:
generating a set of in-phase and quadrature (IQ) samples representing a received radio frequency signal in a sub-GHz frequency band;
receiving the IQ samples at each of a first module and a second module; in parallel,
demodulating, by the first module, the IQ samples according to a first modulation scheme, and
demodulating, by the second module, the IQ samples according to a second modulation scheme different from the first modulation scheme.

2. The method of claim 1, further comprising:
concurrently receiving the IQ samples at a third module; and
demodulating, by the third module, the IQ samples according to a third modulation scheme different from the second modulation scheme.

3. The method of claim 1, wherein the first module is at least one of a Chirp Spread Spectrum (CSS) module, a Frequency Shift Keying (FSK) module, an Orthogonal Frequency Division Multiplexing with Long Range (OFDM-LR) module, or a Multi-Carrier Modulation (MCM) module, wherein the second module is at least another one of the CSS module, the FSK module, the OFDM-LR module, or the MCM module.

4. The method of claim 1, wherein the RF signal comprises an incoming packet with a preamble and a payload, wherein the method further comprises:
demodulating, by the first module, the preamble according to the first modulation scheme; and
demodulating, by the second module, the preamble according to the second modulation scheme different from the first modulation scheme; and
demodulating the payload by only one of the first module or the second module that successfully decoded the preamble.

5. The method of claim 1, wherein the RF signal comprises a first signal corresponding to a first protocol and a second signal corresponding to a second protocol, wherein the method further comprises:
demodulating, by the first module, the IQ samples according to the first modulation scheme to obtain the first signal; and
demodulating, by the second module, the IQ samples according to the second modulation scheme to obtain the second signal.

6. The method of claim 1, wherein the RF signal comprises a first signal corresponding to a first portion of a sub-GHz frequency band and a second signal corresponding to a second portion of the sub-GHz frequency band, wherein the method further comprises:
demodulating, by the first module, the IQ samples in the first portion according to the first modulation scheme to obtain the first signal; and
demodulating, by the second module, the IQ samples in the second portion according to the second modulation scheme to obtain the second signal.

7. An electronic device comprising:
an antenna;
a sub-GHz radio comprising
front end circuitry configured to generate an analog signal based on a sub-GHz wireless signal received using the antenna,
an analog to digital converter configured to generate digital data based on an analog signal generated by the front end circuitry,
one or more computer readable media storing computer executable instructions which, when executed by one or more processors of the electronic device, cause the electronic device to perform operations comprising in parallel,
initiating performance of a first set of one or more preamble detection operations to attempt to detect a preamble for a first modulation scheme in first data generated by the analog to digital converter based on a first sub-GHz wireless signal received using the antenna, and
initiating performance of a second set of one or more preamble detection operations to attempt to detect a preamble for a second modulation scheme in the first data generated by the analog to digital converter based on the first sub-GHz wireless signal received using the antenna,
determining, based on the initiating of performance of the first set of preamble detection operations, that a preamble associated with the first modulation scheme has been detected,
based on the determining that a preamble associated with the first modulation scheme has been detected,
adjusting a gain level associated with the sub-GHz radio, and
demodulating data generated by the analog to digital converter using a demodulation scheme associated with the first modulation scheme.

8. The electronic device of claim 7, wherein the front end circuitry comprises a gain amplifier, and wherein adjusting a gain level comprises sending a signal to the front end circuitry to adjust a gain level for the gain amplifier.

9. The electronic device of claim 8, wherein the gain amplifier comprises a variable gain amplifier or a programmable gain amplifier.

10. The electronic device of claim 7, wherein adjusting a gain level comprises adjusting a gain level associated with software implemented gain control.

11. The electronic device of claim 7,
wherein the one or more computer readable media include
one or more computer readable media of a first module associated with the first modulation scheme, and
one or more computer readable media of a second module associated with the second modulation scheme; and
wherein the one or more processors include
one or more processors of the first module associated with the first modulation scheme, and
one or more processors of the second module associated with the second modulation scheme.

12. An electronic device comprising:
an antenna;
a sub-GHz radio comprising
front end circuitry,
an analog to digital converter,
a first module associated with a first modulation scheme,
a second module associated with a second modulation scheme; and
one or more computer readable media storing computer executable instructions which, when executed by one or more processors of the electronic device, cause the electronic device to perform operations comprising
receiving first data indicating that the first module has successfully detected a preamble for the first modulation scheme, and
based on the receiving of the first data, sending second data causing the second module to cease attempting to detect a preamble for the second modulation scheme.

13. The electronic device of claim 12, wherein the receiving of the first data is receiving of the first data from the first module, and wherein the sending of the second data is sending of the second data to the second module.

14. The electronic device of claim 12, wherein the receiving of the first data is receiving of the first data from the sub-GHz radio, and wherein the sending of the second data is sending of the second data to the sub-GHz radio.

15. The electronic device of claim 12, wherein the one or more computer readable media store computer executable instructions which, when executed by one or more processors of the electronic device, cause the electronic device to perform operations compri sing
sending third data adjusting a gain level for the sub-GHz radio.
